# EUROPEAN PATENT APPLICATION

(11) **EP 3 076 052 A2**
(43) Date of publication of application: **05.10.2016**
(21) Application number: 16163674.1
(22) Date of filing: 04.04.2016
(51) Int. Cl.: F16H 55/17

(54) **RING GEAR FOR AN INTEGRATED DRIVE GENERATOR**

(30) Priority: 02.04.2015 US 201514677590
(71) Applicant: Hamilton Sundstrand Corporation, Charlotte, NC 28217 (US)
(72) Inventor: LEMMERS, Glenn C. Jr., Loves Park, IL 61111 (US); FINKE, Aaron M., Janesville, WI 53545 (US); SMITH, Doren C., Rockford, IL 61101 (US); GROSSKOPF, Andrew P., Rockford, IL 61109 (US); BEHLING, David S., Belvidere, IL 61008 (US)
(74) Representative: Iceton, Greg James

(57) **Abstract**

A ring gear 11 for an integrated drive generator 2 (IDG) includes a gear body 40 including an outer diametric edge and an inner diametric wall. The outer diametric edge includes 129 gear teeth.

## Description

### BACKGROUND

Exemplary embodiments pertain to the art of integrated drive generators and, more particularly, to a ring gear for an integrated drive generator.

Many aircraft employ constant speed drives to provide a motive force to a generator. The generator, typically an alternating current (AC) generator produces an electrical output. Generally, it is desirable for the electrical output to be at a constant frequency. To produce the desired constant frequency, it is further desirable to drive the generator at a constant speed. The constant speed drive provides an interface between an aircraft engine output and the generator. The constant speed drive converts a variable speed input from the aircraft engine to a constant speed output that provides the desired motive force to the generator. In some cases, the constant speed drive and the generator are combined to form an integrated drive generator.

### BRIEF DESCRIPTION

Disclosed is a ring gear for an integrated drive generator (IDG) including a ring gear body including an outer diametric edge and an inner diametric wall. The outer diametric edge includes 129 gear teeth.

Also disclosed is an integrated drive generator (IDG) including a housing, and a differential gear system arranged within the housing. The differential gear system includes a ring gear having a gear body including an outer diametric edge and an inner diametric wall, the outer diametric edge including 129 gear teeth.

### BRIEF DESCRIPTION OF THE DRAWINGS

The following descriptions should not be considered limiting in any way. With reference to the accompanying drawings, like elements are numbered alike:
FIG. 1 depicts an integrated drive generator including a differential gear system having a ring gear, in accordance with an exemplary embodiment;
FIG. 2 depicts a generator and a differential gear system, in accordance with an exemplary embodiment;
FIG. 3 depicts a partially exploded view of the differential gear system of FIG. 2;
FIG. 4 depicts the ring gear of FIG. 2;
FIG. 5 depicts a plurality of gear teeth on an outer diametric edge of the ring gear of FIG. 4; and
FIG. 6 depicts a plurality of gear teeth formed in an inner diametric wall of the ring gear of FIG. 4.

### DETAILED DESCRIPTION

A detailed description of one or more embodiments of the disclosed apparatus and method are presented herein by way of exemplification and not limitation with reference to the Figures.

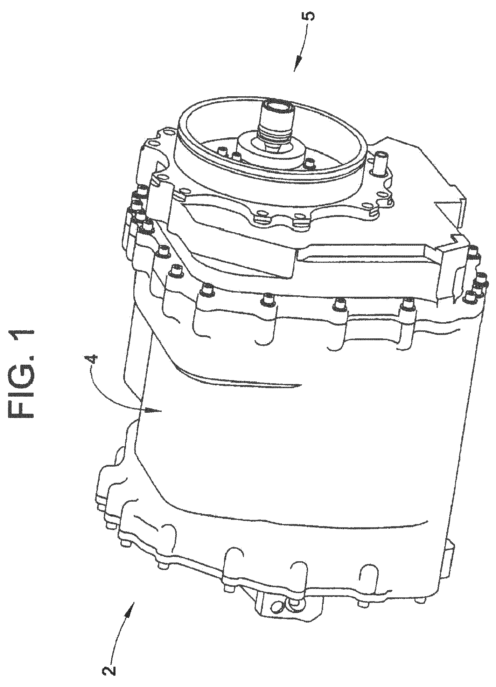

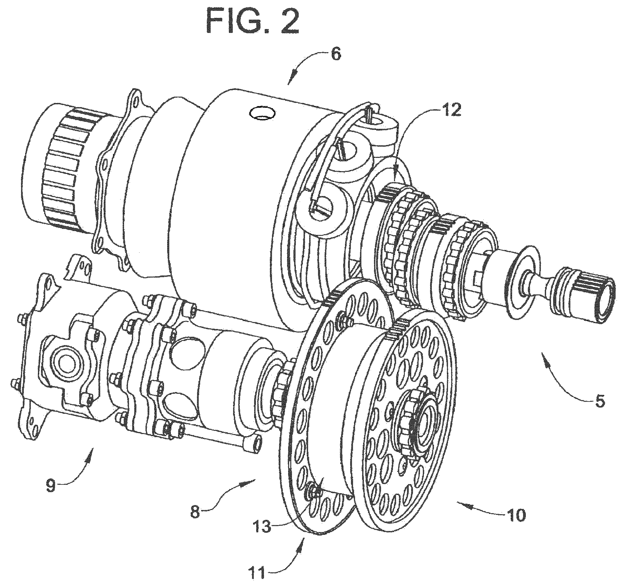

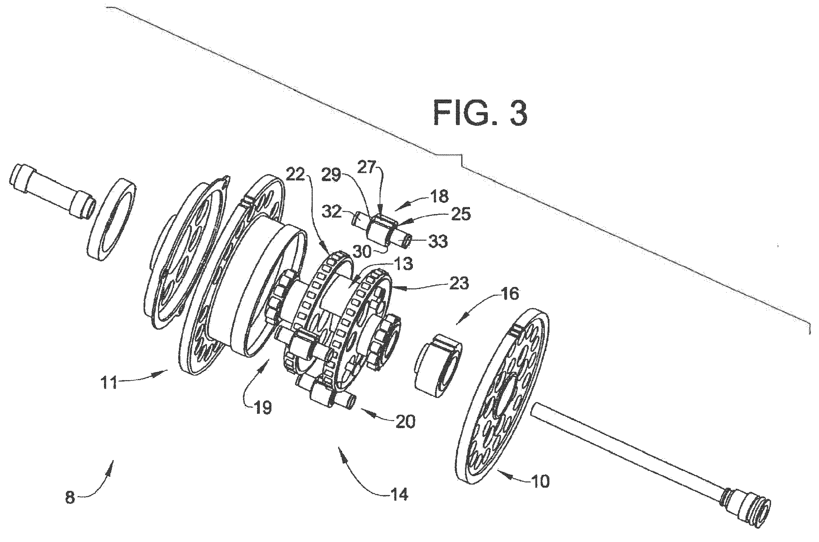

An integrated drive generator (IDG), in accordance with an exemplary embodiment, is indicated generally at 2, in FIGs. 1-3. IDG 2 includes a housing 4 that surrounds an input system 5 operatively coupled to a variable speed drive source (not shown), a generator 6, and an epicyclic differential gear system 8 coupled to a hydraulic system 9. As will be detailed more fully below, epicyclic differential gear system 8 converts a variable speed input from the variable speed drive source into a constant speed output employed to drive generator 6. In accordance with an aspect of an exemplary embodiment, the variable speed drive source takes the form of an aircraft engine. However, it should be understood, that the variable speed drive source may take on a variety of forms.

Epicyclic differential gear system 8 includes an input driven gear 10 coupled to input system 5 and an output or ring gear 11. Ring gear 11 engages with a driven gear 12 on generator 6. Ring gear 11 is also coupled to a carrier 13. Carrier 13 also supports a planet gear system 14 and a sun gear 16. Sun gear 16 is operatively connected to hydraulic system 9. Planet gear system 14 includes a first planet gear 18, a second planet gear 19, and a third planet gear 20. First, second, and third planet gears 18-20 are supported for rotation between a first planet gear support 22 and a second planet gear support 23 of carrier 13.

As each planet gear 18-20 is substantially similarly formed, a detailed description will follow with reference to planet gear 18 with an understanding that planet gears 19 and 20 include similar structure. Planet gear 18 includes a planet gear body 25 including a plurality of planet gear teeth 27. Planet gear 18 also includes first and second, opposing thrust surfaces 29 and 30. Thrust surfaces 29 and 30 are formed at an inward end of corresponding first and second axles or bushings 32 and 33. Thrust surfaces 29 and 30 axially trap planet gear 18 between first and second planet gear supports 22 and 23.

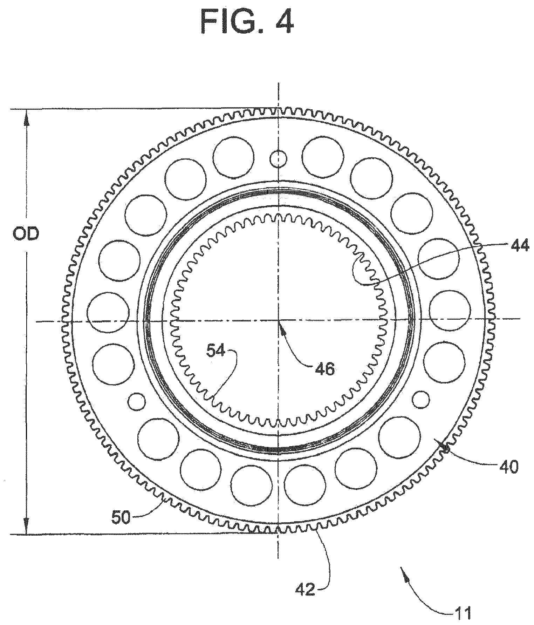

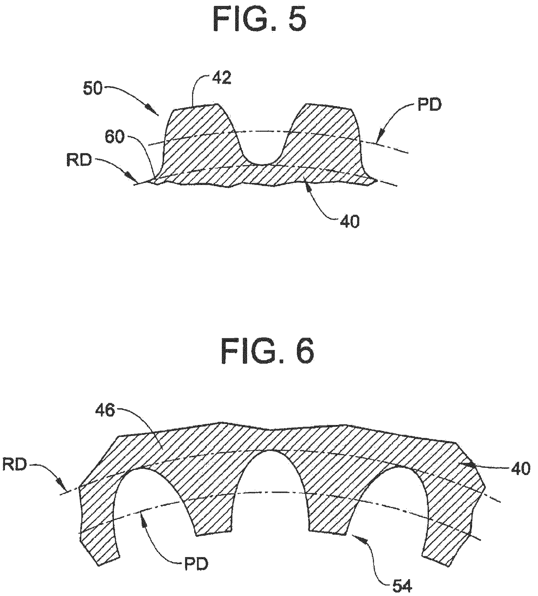

Reference will now follow to FIGs. 4-6 in describing ring gear 11 in accordance with an exemplary embodiment. Ring gear 11 includes a ring gear body 40 having an outer diametric edge 42 and an inner diametric wall 44 having a center 46. Outer diametric edge 42 includes a plurality of outer gear teeth 50. Outer gear teeth 50 are 129 in number, in accordance with an exemplary embodiment. Inner diametric wall 44 includes a plurality of inner gear teeth 54. Inner gear teeth 54 are 63 in number.

In accordance with an exemplary embodiment, ring gear 11 includes a root diameter (RD) or a diameter of ring gear body 40 defined between base portions 60 of opposing ones of outer gear teeth 50 through center 46. In accordance with an aspect of an exemplary embodiment, the root diameter of outer gear teeth 50 is between about 6.302-inch (16.007-cm) and about 6.315-inch (16.04-cm). In accordance with another aspect of an exemplary embodiment, the root diameter is about 6.315-inch (16.04-cm). In further accordance with an exemplary embodiment, outer gear teeth 50 include a pitch diameter (PD) of about 6.45-inch (16.38-cm).

In accordance with yet another aspect of an exemplary embodiment, inner gear teeth 54 include a root diameter (RD) of between about 3.280-inch (8.33-cm) and about 3.293-inch (8.364-cm). In further accordance with an aspect of an exemplary embodiment, inner gear teeth 54 include a root diameter of about 3.280-inch (8.33-cm). In still further accordance with an aspect of an exemplary embodiment, inner gear teeth 54 include a pitch diameter (PD) of about 3.150-inch (8.001-cm).

In accordance with another aspect of an exemplary embodiment, outer gear teeth 50 define an outer diameter (OD) of the ring gear body 40 of between about 6.550-inch (16.637-cm) and about 6.555-inch (16.649-cm). In accordance with another aspect of an exemplary embodiment, outer gear teeth 50 define an outer diameter of the ring gear body 40 of about 6.550-inch (16.637-cm). In accordance with another aspect of an exemplary embodiment, inner gear teeth 54 define an inner diameter of between about 3.070-inch (7.798-cm) and about 3.073-inch (7.805-cm). In accordance with still yet another aspect of an exemplary embodiment, inner gear teeth 54 define an inner diameter of about 3.070-inch (7.798-cm). The ring gear 11, in accordance with an exemplary embodiment, provides a desired constant speed output to generator 6 while maintaining a desired form factor that is accommodated by housing 4.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The term "about" is intended to include the degree of error associated with measurement of the particular quantity based upon the equipment available at the time of filing the application. For example, "about" can include a range of ± 8% or 5%, or 2% of a given value.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A ring gear (11) for an integrated drive generator (2) (IDG) comprising:
a ring gear body (40) including an outer diametric edge and an inner diametric wall, the outer diametric edge including 129 gear teeth.

2. The ring gear according to claim 1, wherein the 129 gear teeth include a root diameter of between about 6.302-inch (16.00-cm) and about 6.315-inch (16.04-cm).

3. The ring gear according to claim 2, wherein the 129 gear teeth include a root diameter of about 6.315-inch (16.04-cm).

4. The ring gear according to claim 1, wherein the 129 gear teeth include a pitch diameter of about 6.45-inch (16.38-cm).

5. The ring gear according to any preceding claim, wherein the inner diametric wall includes 63 gear teeth.

6. The ring gear according to claim 5, wherein the 63 gear teeth include a root diameter of between about 3.280-inch (8.33-cm) and about 3.293-inch (8.364-cm).

7. The ring gear according to claim 5, wherein the 63 gear teeth include a pitch diameter of about 3.150-inch (8.001-cm).

8. The ring gear according to any preceding claim, wherein the 129 gear teeth define an outer diameter of the ring gear body of between about 6.550-inch (16.637-cm) and about 6.555-inch (16.649-cm).

9. The ring gear according to claim 8, wherein the 129 gear teeth define an outer diameter of the ring gear body of about 6.550-inch (16.637-cm).

10. An integrated drive generator (2) (IDG) comprising:
a housing (4); and
a differential gear system (8) arranged within the housing, the differential gear system including the ring gear of claim 1.

11. The integrated drive generator according to claim 10, wherein the 129 gear teeth include a root diameter of between about 6.315-inch (16.04-cm) and about 6.328-inch (16.07-cm).

12. The integrated drive generator according to claim 10, wherein the 129 gear teeth include a pitch diameter of about 6.45-inch (16.38-cm).

13. The integrated drive member according to any of claims 10-12, wherein the inner diametric wall includes 63 gear teeth.

14. The integrated drive generator according to claim 13, wherein the 63 gear teeth include a root diameter of between about 3.280-inch (8.33-cm) and about 3.293-inch (8.364-cm).

15. The integrated drive generator according to claim 13, wherein the 63 gear teeth include a pitch diameter of about 3.150-inch (8.001-cm).
